# EUROPEAN PATENT SPECIFICATION

(11) **EP 3 113 576 B1**
(45) Date of publication and mention of the grant of the patent: **13.09.2017**
(21) Application number: 15174966.0
(22) Date of filing: 02.07.2015
(51) Int. Cl.: H05B 6/64, A47J 36/02, B65D 81/34, F24C 15/16

(54) **TRAY FOR COOKING FOOD AND PROCESS FOR MANUFACTURING A TRAY**
SCHALE ZUM KOCHEN VON LEBENSMITTELN UND VERFAHREN ZUR HERSTELLUNG EINER SCHALE
PLATEAU POUR LA CUISSON D'ALIMENTS ET PROCÉDÉ DE FABRICATION D'UN PLATEAU

(43) Date of publication of application: 04.01.2017
(73) Proprietor: Electrolux Appliances Aktiebolag, 105 45 Stockholm (SE)
(72) Inventor: REINHARD-HERRSCHER, Fabienne, 91541 Rothenburg ob der Tauber (DE); HORSTMANN, Reiner, 91541 Rothenburg ob der Tauber (DE); BODECHTEL, Vera, 91541 Rothenburg ob der Tauber (DE); MEIDER, Maike, 91541 Rothenburg ob der Tauber (DE); LUCKHARDT, Christoph, 91541 Rothenburg ob der Tauber (DE)
(74) Representative: Electrolux Group Patents

(56) References cited:
- WO-A1-95/33360
- DE-U1-202009 003 589
- GB-A- 2 432 509
- US-B1- 6 213 005

## Description

The present invention relates to a tray for cooking food in an oven or a microwave and a process for manufacturing such a tray.

As consumers prepare food in their oven, for example different kinds of potato products or other vegetables, the results are not always convincing since conventional baking trays do not allow that all sides of the food are evenly baked. In order to achieve uniform cooking the food should be turned several times during the cooking process.

For example, an insert in form of a closed basket is known, that is automatically rotated during the cooking process. For this purpose, however, a motor is required, which in turn increases the energy consumption.

DE 20 2009 003 589 U1 discloses a backing tray, preferably for backing frozen potato foodstuff, made out of expanded metall. Expandable metal can be very sharp-edged so that the surface of the food, which is prepared with such a tray, may be damaged. Therefore, food leftovers can easily set in the tray, whereby a cleaning of the tray is more difficult.

It is an object of the present invention to provide a tray for cooking food in an oven or a microwave that allows preparing food with a good quality and low energy consumption and a process for manufacturing such a tray.

The first object is achieved by a tray for cooking food in an oven or in a microwave according to claim 1.

According to claim 1 the present invention provides a tray for cooking food in an oven or in a microwave comprising
- a flat base plate,
- at least one side wall surrounding the base plate, whereby the base plate and the at least one side wall are integrally formed,
- the base plate and the at least one side wall having a lattice structure comprising a plurality of webs and a plurality of openings,
- the base plate (12) is a flat, non-flexible plate,
- the plurality of openings (18) are introduced by means of a laser (36) and/or by punching out,
- guiding means attached to the base plate and/or the at least one side wall, and
- a surface formed by the base plate and the at least one side wall, whereby at least 45% of the surface is formed by the plurality of openings.

The core of the present invention is that the ratio of the webs to the openings is as minimal as possible, this means the tray is prepared by as little as possible of material and the thermal mass is significantly reduced. With other words: The tray shows a lattice structure whereby the openings define an open space and this open space is larger than 45%, preferably 50% and more preferably 60% of the space of the whole tray. That means an areal proportion of the plurality of openings is at least 45% of the total area of the tray, thus the area formed by the base plate and the side walls. This reduces the thermal mass being present in the oven and therefore results in lower energy consumption and a faster heat up of the tray. Thereby pre-heating the oven is not necessary what in turn saves time, energy and costs.

Furthermore the openings are dimensioned such that a fall through of the food is prevented, so that there is no need to use a pan liner. Possibly running down oil gathers at the webs. As the hot air can flow around the food from all sides, no turning of the food during the baking process is required.

The base plate and the at least one side wall are integrally formed. The plurality of openings were introduced by means of a laser or punched out, so that no expensive connection techniques are necessary. A flat base plate further simplifies applying a coating if desired.

The tray comprises guiding means attached to the base plate and/or the at least one side wall for guiding and holding the tray in an oven or a microwave. The guiding means are for example configured such that they can engage with a recess that is provided in an inner wall of an oven for guiding the tray during inserting it into the oven or removing it therefrom and for supporting it during the cooking process. This has the advantage that the tray can be putted directly into the oven, no grid is required on which the tray can be placed so that the thermal mass inside the oven is further reduced.

For use in a microwave the guiding means might be designed as a support to hold the tray at a distance from the bottom of the microwave, so that the food can be heated evenly from all sides. To avoid hot spots, the tray with the guiding means may additionally be placed on a turntable or a microwave stirrer may be used.

Preferably, the plurality of openings are placed in regular intervals and two webs cross each other at a right angle. The openings thus have a rectangular or even square shape.

In particular, the guiding means include a peripheral frame surrounding the at least one side wall. Such a frame might be formed as a wire frame or in the form of a bent rod that surrounds the tray respectively the at least one side wall completely and might be attached to the at least one side wall by known joining techniques such as welding.

In a preferred embodiment, however, the guiding means include at least one support member that is attached at both ends to the frame and at its middle piece is located at a bottom side of the base plate. The middle piece of the support member may be also attached to the bottom of the base plate. For example, when the guiding means comprise at least two spaced apart support members, it is not necessary to fix the tray to the support member, as the tray is holded sufficiently horizontal by the support members. Therefore guiding means can be used with different types of tray, for example with trays made of different materials. The support member is particularly in form of a rod and attached parallel and congruently to one of the webs of the base plate in order not to cover the openings, what would lead to an impairment of the flow of hot air during the cooking process.

For use of the tray in an oven, the tray respectively the base plate and the at least one side wall are preferably made of aluminium that has a good thermal conductivity.

Alternatively the base plate and the at least one side wall is made of stainless steel.

Another preferred embodiment provides that the base plate and the at least one side wall is made of high temperature plastics showing at least partially a self-heating behaviour. Thus the entire tray can consist of high temperature plastics with self-heating behaviour. Such a material is preferably used when the tray should be applied in a microwave. However it may also be sufficient that the tray is made of high temperature plastics comprising only an inner layer or an inner core that shows self-heating behaviour and a good heat distribution.

For example microwave-heatable thermoplastic compositions may be used, which are formed by mixing a microwave receptive additive with a thermoplastic polymer. Polymers which may be used here are for example selected from polyolefins, polyamides, polycarbonates, polyesters, polylactic acid and polylactide polymers, polysulfones, polylactones, polyacetals, acrylonitrile-butadiene-styrene resins (ABS), polyphenyleneoxide (PPO), polyphenylene sulfide (PPS), styreneacrylonitrile resins (SAN), polyimides, styrene maleic anhydride (SMA), aromatic polyketones (PEEK, PEK, and PEKK), ethylene vinyl alcohol copolymer, and copolymers or mixtures thereof. The microwave receptive additives used are for example selected from elements, heavy metal salts, salt hydrates, complex hydrates, other simple hydrates, metal oxides complex oxides, metal sulfides/carbides/nitrides, semiconductors, ion and organic conductors.

The degree to which any material will heat in the presence of a microwave field is defined by its dielectric loss factor. Also polar polymers without microwave receptive additives having a dielectric loss factor between 5·10-4 and 5·10-3 may be used for the tray that is intended for use in a microwave oven, for example PVC (polyvinylchloride) or PU (polyurethane).

Preferably, the base plate and the at least one side wall are additionally provided with a coating that is allowed for food contact. The coating may enclose the tray respectively the base plate and the at least one side wall completely.

In particular the coating is an enamel based coating and/or a PTFE (Polytetrafluoroethylene)-based coating and/or Sol-gel based coating and/or ceramic based coating. Firstly such a coating has the advantage that the food can be easily removed from the tray after cooking as it does not stick to the tray. Secondly, the tray is more easy to clean after the food preparation.

The second object of the invention is achieved by a process for manufacturing an above-described tray according to claim 10.

According to claim 10 the present invention provides a process for manufacturing a tray, comprising the following steps:
- providing a plate,
- introducing the plurality of openings into the plate by means of a laser and/or by punching out,
- deforming an edge of the plate to form the at least one side wall and the base plate,
- attaching the guiding means to the base plate and/or the at least one side wall.

The plate, thus the lateral edges of the plate will be deformed respectively bent along at least one deformation respectively bending axis to form the base plate and the at least one side wall after having introduced the openings. The deforming step is carried out at elevated temperature. The edges of the plate is the maximum so far deformed until it forms an angle of 90° with the base plate. Before the deforming step, the plate might be cut at the corners for making it easier to bent the edges of the plate upwardly. The guiding means are attached to the base plate and /or the at least one side wall for example by using welding techniques.

According to a preferred embodiment a coating is applied to the base plate and/or the at least one side wall in a subsequent step. As the base plate is flat, the coating can be applied in a simple manner. Materials used as a coating have been mentioned above.

Novel and inventive features of the present invention are set forth in the appended claims.

The present invention will be described in further detail with reference to the drawing, in which
- FIG 1: illustrates a schematic top view of a tray according to the present invention,
- FIG 2: illustrates a schematic perspective view of a tray according to the present invention,
- FIG 3: illustrates a schematic view of a process for manufacturing a tray according to the present invention.

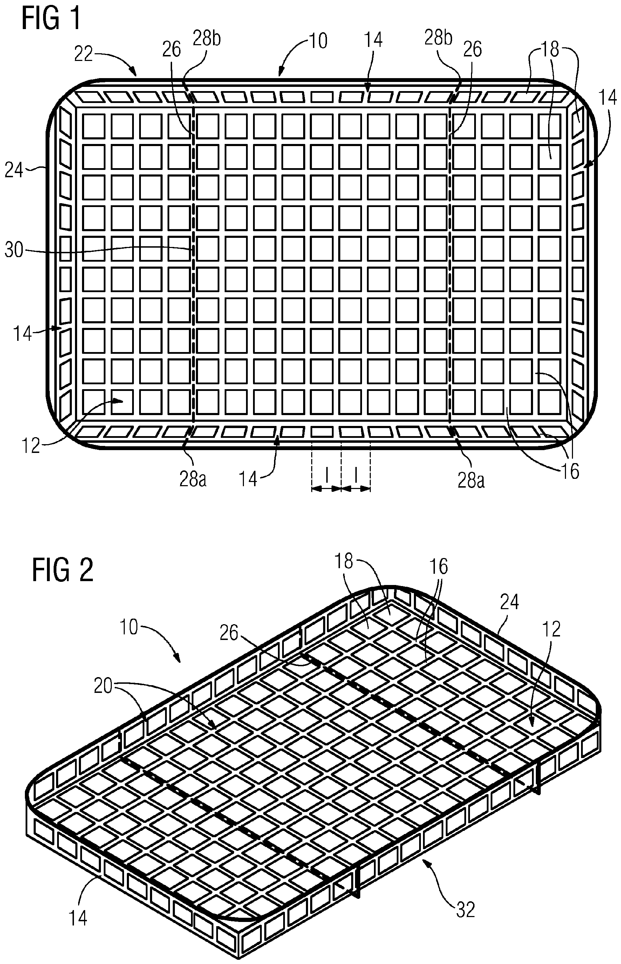

FIG 1 illustrates a tray 10 for cooking food in an oven or a microwave oven in a schematic top view, Fig.2 illustrates the tray 10 in a schematic perspective view.

The tray 10 comprises a flat, non-flexible base plate 12 and at least one side wall 14 surrounding the base plate 12. The base plate 12 and the at least one side wall 14 are integrally formed. During the manufacturing process a plate is deformed to form the tray 10 with its base plate 12 and at least one side wall 14. According to Fig. 1 the tray 10 comprises a rectangular base plate 12 with four side walls 14 adjoining the base plate 12 on its four sides.

The base plate 12 and the side wall 14 have a lattice structure comprising a plurality of webs 16 and a plurality of openings 18 that were introduced in the plate by means of a laser (not shown). Alternatively the openings could have been introduced by punching out. At least 45% of the surface 20 formed by the base plate 12 and the four side walls 14, thus at least 45% of the surface of the entire plate, is formed or rather covered by the openings 18. The openings 18 are placed in regular intervals I and two webs 16 cross each other at a right angle, thus two webs overlapping crosswise.

Furthermore, guiding means 22 are attached to the base plate 12 and the at least one side wall 14. More specifically, in this embodiment the guiding means 22 include a peripheral frame 24 that surrounds side walls 14 completely. Further the guiding means 22 include two support members 26 that is attached with its both ends 28a, 28b to the frame 24 and at its middle piece 30 (shown in dashed lines) is located at a bottom side 32 of the base plate 12.

In principle the tray 10 respectively the base plate 12 and the side walls 14 are for example made of aluminium or stainless steel with or without a coating. In this case, the base plate 12 and the at least one side wall 14 is made of high temperature plastics showing at least partially a self-heating behaviour. Additionally the base plate 12 and the four side walls 14 are provided with a coating that encloses the tray 10 completely. The coating, which is an PTFE-based coating that is allowed for food contact and easy to clean, is applied to the tray in a subsequent manufacturing step.

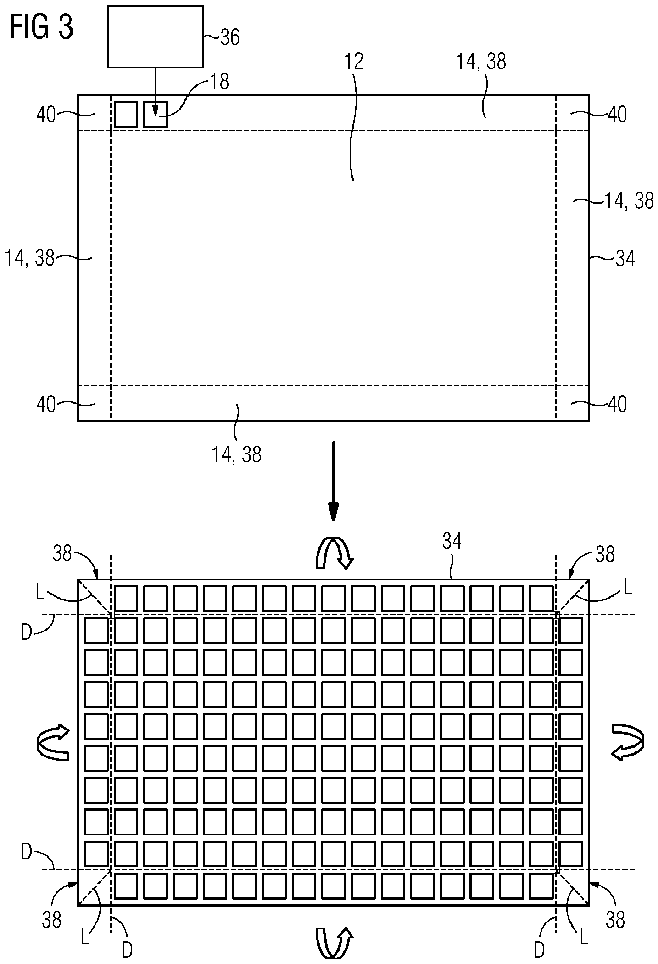

Fig. 3 shows a process for manufacturing the tray 10 illustrated in Fig. 1 and 2. A plate 34 is provided and several openings 18 are introduced into the plate 34 using a laser 36. The corners 40 of the plate 34 may be not provided with openings 18 as subsequently the corners 40 of the plate 34 may be cutted diagonally a bit far along the cutting lines L that are illustrated in dashed lines. This simplifies deforming the four lateral edges 38 of the plate 34 in a subsequent step along the deforming respectively bending axes D, again illustrated by dashed lines and in direction of the illustrated arrows. Afterwards, guiding means 22 are attached to the base plate 12 and the at least one side wall 14 and a coating may be applied to the base plate 12 and the four side walls 14 in a further manufacturing step for obtaining a tray 10 as it is shown in Fig. 1 and 2.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: tray
- 12: base plate
- 14: side wall
- 16: web
- 18: opening
- 20: surface
- 22: guiding means
- 24: frame
- 26: support member
- 28a, 28b: end of support member
- 30: middle piece of support member
- 32: bottom side of the base plate
- 34: plate
- 36: laser
- 38: edges of the plate 34
- 40: corners of the plate 34

- I: interval
- L: cutting lines
- D: deforming/bending axis

## Claims

1. A tray (10) for cooking food in an oven or a microwave oven, comprising
- a flat base plate (12),
- at least one side wall (14) surrounding the base plate (12), whereby the base plate (12) and the at least one side wall (14) are integrally formed,
- the base plate (12) and the at least one side wall (14) having a lattice structure comprising a plurality of webs (16) and a plurality of openings (18), **characterized in that**
- the base plate (12) is a flat, non-flexible plate,
- the plurality of openings (18) are introduced by means of a laser (36) and/or by punching out,
- guiding means (22) attached to the base plate (12) and/or the at least one side wall (14), and
- a surface (20) formed by the base plate (12) and the at least one side wall (14), whereby at least 45% of the surface (20) is formed by the plurality of openings (18).

2. The tray (10) according to claim 1, **characterised in that** the openings (18) are placed in regular intervals (I) and two webs (16) cross each other at a right angle.

3. The tray (10) according to any of the preceding claims, **characterized in that** the guiding means (22) include a peripheral frame (24) surrounding the at least one side wall (14).

4. The tray (10) according to any of the preceding claims, **characterized in that** the guiding means (22) include at least one support member (26) that is attached at both ends (28a, 28b) to the frame (24) and at its middle piece (30) is located to a bottom side (32) of the base plate (12).

5. The tray (10) according to any one of the preceding claims, **characterized in that**
the base plate (12) and the at least one side wall (14) are made of aluminium.

6. The tray (10) according to any one of the claims 1 to 4, **characterized in that**
the base plate (12) and the at least one side wall (14) are made of stainless steel.

7. The tray (10) according to any one of claims 1 to 4, **characterized in that**
the base plate (12) and the at least one side wall (14) are made of high temperature plastics showing at least partially a self-heating behaviour.

8. The tray (10) according to any one of the preceding claims, **characterized in that**
the base plate (12) and the at least one side wall (14) are provided with a coating.

9. The tray (10) according to claim 8,
**characterized in that**
the coating is an enamel based coating and/or a PTFE-based coating and/or Sol-gel based coating and/or ceramic based coating.

10. Process for manufacturing a tray (10) according to one of the preceding claims, comprising the following steps:
- providing a plate (34),
- introducing the plurality of openings (18) into the plate (34),
- deforming an edge of the plate to form the at least one side wall (14) and the base plate (12),
**characterized in**
- attaching the guiding means (22) to the base plate (12) and/or the at least one side wall (14), and
- introducing the plurality of openings (18) into the plate (34) by means of a laser (36) and/or by punching out.

11. Process for manufacturing a tray (10) according to claim 10, **characterised in** applying a coating to the base plate (12) and/or the at least one side wall (14) in a subsequent step.

## Patentansprüche

1. Schale (10) zum Kochen von Lebensmitteln in einem Ofen oder einem Mikrowellenherd, umfassend
- eine flache Basisplatte (12),
- mindestens eine Seitenwand (14), die die Basisplatte (12) umgibt, wobei die Basisplatte (12) und die mindestens eine Seitenwand (14) einstückig geformt sind,
- wobei die Basisplatte (12) und die mindestens eine Seitenwand (14) eine Gitterstruktur aufweisen, die eine Vielzahl von Stegen (16) und eine Vielzahl von Öffnungen (18) umfasst,
**dadurch gekennzeichnet, dass**
- die Basisplatte (12) eine flache unflexible Platte ist,
- die Vielzahl von Öffnungen (18) mit einem Laser (36) eingebracht und/oder ausgestanzt werden,
- Führungsmittel (22) an der Basisplatte (12) und/oder an der mindestens einen Seitenwand (14) befestigt sind, und
- eine Oberfläche (20) von der Basisplatte (12) und der mindestens einen Seitenwand (14) geformt wird, wobei mindestens 45% der Oberfläche (20) von der Vielzahl von Öffnungen (18) gebildet wird.

2. Schale (10) nach Anspruch 1, **dadurch gekennzeichnet, dass** die Öffnungen (18) in regelmäßigen Abständen (I) angeordnet sind und sich zwei Stege (16) in einem rechten Winkel kreuzen.

3. Schale (10) nach einem der vorhergehenden Ansprüche, **dadurch gekennzeichnet, dass** das Führungsmittel (22) einen Umfangsrahmen (24) aufweist, der die mindestens eine Seitenwand (14) umgibt.

4. Schale (10) nach einem der vorhergehenden Ansprüche, **dadurch gekennzeichnet, dass** das Führungsmittel (22) mindestens ein Stützelement (26) aufweist, das an beiden Enden (28a, 28b) am Rahmen (24) befestigt ist und in seinem Mittelstück (30) auf einer Bodenseite (32) der Basisplatte (12) angeordnet ist.

5. Schale (10) nach einem der vorhergehenden Ansprüche, **dadurch gekennzeichnet, dass**
die Basisplatte (12) und die mindestens eine Seitenwand (14) aus Aluminium bestehen.

6. Schale (10) nach einem der Ansprüche 1 bis 4, **dadurch gekennzeichnet, dass**
die Basisplatte (12) und die mindestens eine Seitenwand (14) aus Edelstahl bestehen.

7. Schale (10) nach einem der Ansprüche 1 bis 4, **dadurch gekennzeichnet, dass**
die Basisplatte (12) und die mindestens eine Seitenwand (14) aus Hochtemperatur-Kunststoff bestehen, der mindestens teilweise ein selbsterwärmendes Verhalten zeigt.

8. Schale (10) nach einem der vorhergehenden Ansprüche, **dadurch gekennzeichnet, dass**
die Basisplatte (12) und die mindestens eine Seitenwand (14) mit einer Beschichtung versehen sind.

9. Schale (10) nach Anspruch 8,
**dadurch gekennzeichnet, dass**
die Beschichtung eine Beschichtung auf Emaille-Basis und/oder eine Beschichtung auf PTFE-Basis und/oder eine Beschichtung auf Sol-Gel-Basis und/oder eine Beschichtung auf Keramikbasis ist.

10. Verfahren zur Herstellung einer Schale (10) nach einem der vorhergehenden Ansprüche, umfassend die folgenden Schritte:
- Bereitstellen einer Platte (34),
- Einführen der Vielzahl von Öffnungen (18) in die Platte (34),
- Verformen eines Rands der Platte zur Bildung der mindestens einen Seitenwand (14) und der Basisplatte (12),
**gekennzeichnet durch**
- Befestigen des Führungsmittels (22) an der Basisplatte (12) und/oder der mindestens einen Seitenwand (14), und
- Einführen der Vielzahl von Öffnungen (18) in die Platte (34) mit einem Laser (36) und/oder durch Ausstanzen.

11. Verfahren zur Herstellung einer Schale (10) nach Anspruch 10, **gekennzeichnet durch** Aufbringen einer Beschichtung auf der Basisplatte (12) und/oder der mindestens einen Seitenwand (14) in einem darauffolgenden Schritt.

## Revendications

1. Plateau (10) pour la cuisson d'aliments dans un four ou un four à micro-ondes, comprenant :
- une plaque de base (12) plane,
- au moins une paroi latérale (14) entourant la plaque de base (12), la plaque de base (12) et la ou les parois latérales (14) étant formées d'un seul tenant,
- la plaque de base (12) et la ou les parois latérales (14) comportant une structure à mailles comprenant une pluralité de bandes (16) et une pluralité d'ouvertures (18),
**caractérisé en ce que**
- la plaque de base (12) est une plaque plane rigide,
- la pluralité d'ouvertures (18) sont formées au moyen d'un laser (36) et/ou par poinçonnage,
- des moyens de guidage (22) fixés à la plaque de base (12) et/ou à la ou aux parois latérales (14), et
- une surface (20) formée par la plaque de base (12) et la ou les parois latérales (14), au moins 45 % de la surface (20) étant formés par la pluralité d'ouvertures (18).

2. Plateau (10) selon la revendication 1,
**caractérisé en ce que** les ouvertures (18) sont placées à intervalles (I) réguliers et deux bandes (16) se croisent à angle droit.

3. Plateau (10) selon l'une quelconque des revendications précédentes,
**caractérisé en ce que** les moyens de guidage (22) comprennent un cadre périphérique (24) entourant la ou les parois latérales (14).

4. Plateau (10) selon l'une quelconque des revendications précédentes,
**caractérisé en ce que** les moyens de guidage (22) comprennent au moins un élément de support (26) qui est fixé au niveau de ses deux extrémités (28a, 28b) au cadre (24) et au niveau de sa partie médiane (30) est situé sur une face inférieure (32) de la plaque de base (12).

5. Plateau (10) selon l'une quelconque des revendications précédentes,
**caractérisé en ce que**
la plaque de base (12) et la ou les parois latérales (14) sont constituées d'aluminium.

6. Plateau (10) selon l'une quelconque des revendications 1 à 4,
**caractérisé en ce que**
la plaque de base (12) et la ou les parois latérales (14) sont constituées d'acier inoxydable.

7. Plateau (10) selon l'une quelconque des revendications 1 à 4,
**caractérisé en ce que**
la plaque de base (12) et la ou les parois latérales (14) sont constituées d'une matière plastique résistant aux températures élevées présentant au moins partiellement un comportement d'auto-échauffement.

8. Plateau (10) selon l'une quelconque des revendications précédentes,
**caractérisé en ce que**
la plaque de base (12) et la ou les parois latérales (14) sont pourvues d'un revêtement.

9. Plateau (10) selon la revendication 8,
**caractérisé en ce que**
le revêtement est un revêtement à base d'émail et/ou un revêtement à base de PTFE et/ou un revêtement à base de produit sol-gel et/ou un revêtement à base de céramique.

10. Procédé de fabrication d'un plateau (10) selon l'une des revendications précédentes, comprenant les étapes suivantes :
- prévoir une plaque (34),
- former la pluralité d'ouvertures (18) dans la plaque (34),
- déformer un bord de la plaque de façon à former la ou les parois latérales (14) et la plaque de base (12),
**caractérisé par**
- le fait de fixer les moyens de guidage (22) à la plaque de base (12) et/ou à la ou aux parois latérales (14), et
- le fait de former la pluralité d'ouvertures (18) dans la plaque (34) au moyen d'un laser (36) et/ou par poinçonnage.

11. Procédé de fabrication d'un plateau (10) selon la revendication 10, **caractérisé par** le fait d'appliquer un revêtement à la plaque de base (12) et/ou à la ou aux parois latérales (14) dans une étape ultérieure.
